# EUROPEAN PATENT SPECIFICATION

(11) **EP 2 967 762 B1**
(45) Date of publication and mention of the grant of the patent: **02.01.2019**
(21) Application number: 14719079.7
(22) Date of filing: 10.03.2014
(51) Int. Cl.: A61C 8/00

(54) **DEVICE FOR USE IN DENTAL TECHNOLOGY**
VORRICHTUNG ZUR VERWENDUNG IN DER DENTALTECHNIK
DISPOSITIF À UTILISER EN TECHNOLOGIE DENTAIRE

(30) Priority: 14.03.2013 IT VI20130070
(43) Date of publication of application: 20.01.2016
(73) Proprietor: Gonella, Giandomenico, 36033 Isola Vicentina (VI) (IT); Peretto, Marco, 36050 Gambugliano (VI) (IT)
(72) Inventor: Gonella, Giandomenico, 36033 Isola Vicentina (VI) (IT); Peretto, Marco, 36050 Gambugliano (VI) (IT)
(74) Representative: Ziliotto, Tiziano
(86) International application number: PCT/IB2014/059580
(87) International publication number: WO 2014/141033

(56) References cited:
- WO-A1-2008/147097
- WO-A1-2011/138029
- US-A- 5 468 150

## Description

### TECHNICAL FIELD OF THE INVENTION

The present invention concerns the field of dental technology. In particular, the present invention concerns a device for anchoring a dental prosthesis. In further detail, the present invention concerns a device for anchoring a dental prosthesis to one or more implants fixed to the bone structure (for example mandible and/or jaw) of a patient.

### DESCRIPTION OF THE STATE OF THE ART

In the sector of dental technology anchoring devices are known, which are used to anchor dental prostheses to the bone structure of a patient. In particular, the use of anchoring devices is known, which are suited to be anchored to one or more implants fixed (through suitable dental techniques) to the bone structure of a patient. Examples of this are given in US2010/0266985 and US5468150.

In practice, the anchorage of dental prostheses like bridgework, crowns or complete prostheses is obtained by previously fixing one or more implants (depending on the type of prostheses needed by the patient), and successively anchoring a suitable structure to the same implants, after which the prosthesis itself will be fixed to said structure, for example by means of cement or similar materials.

The anchorage structure thus comprises a plurality of stumps or devices in a number equal to the number of implants and each one of these is suited to be anchored to a corresponding implant. In particular, in the devices according to the known art, each one of the stumps is at least partially inserted in a housing seat of a corresponding implant and then fixed to the implant itself, for example by means of cement or similar anchoring materials, if necessary combined with anchoring means like screws or similar means. In this case, the anchoring stump is hollow, so that it can house an anchoring screw that is fitted in the implant.

A first drawback posed by the devices according to the known art is related to the fact that, in the cases where there are more than one implant, it is very difficult if not practically impossible to obtain the perfect parallelism of the implants, so that in practice the latter are misaligned (their development axes and/or longitudinal axes are not parallel). At this point, since each one of the stumps must be at least partially inserted in a corresponding implant, the stumps will have the same mutual orientation as the implants, so that also the stumps will be misaligned and will not be parallel to each other. This actually makes it impossible to insert the stumps simultaneously in the corresponding implants, as the directions of insertion of the various stumps are not parallel to each other.

Usually, in order to make up for the convergence (or divergence) of both the implants and the stumps, alternative solutions are adopted which however do not guarantee the perfect anchorage of the structure or even affect its stability (at least over medium to long periods of time). For example, one or more stumps are shortened; in this way, however, only some of them will be inserted in the corresponding implants, while the filed or shortened ones can only be "rested" on the corresponding implants. This means that the load to which the structure will be subjected (in particular during mastication) will neither be discharged nor distributed properly among the various stumps and/or implants. In the case of a shortened stump, the load will be discharged almost exclusively on the anchoring screw (housed inside the stump) and from this onto the implant, with the risk of negatively affecting the stability of the implant over time.

Furthermore, the fact that the implants and/or the stumps are not parallel (but convergent or divergent) hinders the testing operations usually performed on the anchoring structure before its definitive anchorage or makes such operations difficult to carry out; for example, only after shortening one or more stumps the operator can evaluate the definitive position that will be assumed by the anchoring structure with respect to the implants and therefore with respect to the bone structure of the patient.

The main object of the present invention is therefore to solve or at least partially eliminate the problems mentioned above, which are typical of the anchoring devices and/or structures according to the state of the art.

In particular, it is one object of the present invention to provide an anchoring device for dental prostheses that makes it possible to solve the problems deriving from the fact that the implants are not parallel.

In particular, it is one object of the present invention to provide an anchoring structure that is suited to be anchored to a plurality of implants and comprises a plurality of anchoring devices, each one of which suited to be inserted in a corresponding implant even if the implants are not parallel.

### SUMMARY OF THE PRESENT INVENTION

The present invention is as claimed in claim 1 and the dependent claims, and is on the general consideration that the problems observed in the state of the art can be at least partially solved through the construction of an anchoring device comprising a translatable portion (alternatively extensible and retractable) suited to be at least partially inserted and housed inside an implant.

In this way, it will be possible to construct anchoring structures comprising a plurality of said devices, each one of said devices being suited to be anchored to a corresponding implant.

In fact, even in case of non parallelism or misalignment of the implants (convergence and/or divergence), since the devices are provided with a translatable portion or element, it will be sufficient to make the translation direction of said translatable element or portion parallel to the direction of development of the corresponding implant and then proceed with the insertion of each translatable element in the corresponding implant.

According to a first aspect of the invention, the same concerns a device for anchoring a dental prosthesis to at least one at least partially hollow implant fixed to the bone structure of a patient, said device comprising an anchoring component suited to be anchored to said at least one implant, wherein said anchoring component comprises an element suited to be translated between a first retracted position and a second position opposite said first retracted position, so that when said translatable element is translated from said first retracted position to said second opposite position, a first end portion of said translatable element is at least partially inserted in said at least one implant.

According to the present invention, said anchoring component comprises a hollow tubular element, and therefore said translatable element, when it is in said first retracted position, is housed in said hollow tubular element, while when it is in said second opposite position said end portion projects at least partially from said hollow tubular element.

According to the present invention, said hollow tubular element comprises a first and a second tubular portion that are suited to be alternatively connected to each other and disconnected from each other. Preferably, in the device according to the present invention, said first tubular portion is suited to be alternatively screwed into and unscrewed from said second tubular portion. Obviously, according to the needs and/or circumstances, there are other possible solutions for mutually coupling said first and said second tubular portions with each other; for example, the same can be coupled through interference and/or be glued, etc.

Still preferably, in the device according to the present invention said translatable element comprises a first abutment surface and can be translated from said first retracted position to said second opposite position by exerting a thrust action on said first abutment surface.

According to a further embodiment of the present invention, said first abutment surface belongs to the second end portion of said translatable element that is opposite said first end portion.

According to a further embodiment of the present invention, said translatable element is suited to be translated from said first retracted position to said second opposite position by means of an anchoring tool that comprises a thrusting surface suited to abut said first abutment surface of said translatable element in such a way as to exert said thrust action on said first abutment surface of said translatable element.

Preferably, said translatable element is suited to be translated from said first retracted position to said second opposite position by means of said anchoring tool that comprises also an end portion suited to progressively engage with a corresponding engaging portion of an implant, so that when said tool progressively engages with said implant said thrusting surface of said tool exerts said thrust action on said first abutment surface of said translatable element. According to a further embodiment of the present invention, said translatable element is hollow and suited to partially house said anchoring tool inside it, so that said end portion of said anchoring tool projects from said first end portion of said translatable element.

Preferably, said translatable element is suited to be translated from said first retracted position to said second opposite position by means of said anchoring tool, wherein said end portion comprises a threaded part suited to progressively engage with a corresponding threaded engaging portion of said implant, so that when said tool is rotated said threaded engaging portions, respectively of said tool and of said implant, progressively engage with each other.

According to a further embodiment of the present invention, said translatable element is suited to be translated from said second position to said first retracted position by means of an extraction tool.

Still preferably, said translatable element comprises a threaded portion suited to engage with a corresponding threaded portion of said extraction tool, so that when said threaded portion of said translatable element progressively engages with said threaded portion of said extraction tool said translatable element is translated from said second position to said first retracted position.

According to a further embodiment of the present invention, said threaded portion of said translatable element is suited to engage with a corresponding threaded portion of said extraction tool, the latter furthermore comprising an end portion suited to be housed and freely rotated inside said implant.

According to a further embodiment of the present invention, the translatable element is of the bayonet type and is suited to be rotated and translated from the retracted position to the exposed position and vice versa. In particular, the translatable element comprises two tabs that project from its end portion in opposite radial directions.

According to this embodiment of the invention, with the element in its advanced or exposed position each one of said tabs is suited to be fitted in a corresponding engagement seat obtained in the tubular wall of the implant and communicating with the inside of the implant.

According to a further embodiment of the invention, the element comprises an engagement seat with substantially hexagonal cross section for a tool having a matching shape (for example, a simple Allen wrench).

The present invention furthermore concerns a structure for anchoring a dental prosthesis to at least two at least partially hollow implants fixed to the bone structure of a patient, said structure comprising at least two anchoring devices, each suited to be anchored to one of said at least two implants.

According to a preferred embodiment of the invention, said at least two devices are rigidly fixed to each other and the translation directions of the translatable elements of said at least two devices could be not parallel.

The scope of the present invention furthermore comprises a kit for anchoring a dental prosthesis to at least one implant that is at least partially hollow and fixed to the bone structure of a patient, said kit comprising at least one device and/or one structure according to the present invention and at least one anchoring tool for translating said one or more translatable elements from said first retracted position to said second opposite position.

Preferably, said anchoring kit further comprises at least one extraction tool for translating said one or more translatable elements from said second position to said first retracted position.

Finally, the scope of the present invention includes also a system for anchoring a dental prosthesis to the bone structure of a patient, comprising at least one device and/or at least one structure and/or a kit according to the present invention and also comprising one or more at least partially hollow systems suited to be rigidly fixed to the bone structure of a patient.

### BRIEF DESCRIPTION OF THE DRAWINGS

Further advantages, objects and characteristics, as well as further embodiments of the present invention, are defined in the claims and are explained here below through the following description, in which reference is made to the attached tables; in the drawings, corresponding or equivalent characteristics and/or component parts of the present invention are identified by the same reference numbers. It should however be noted that the present invention is not limited to the specific embodiments described below and illustrated in the drawings; on the contrary, the scope of the present invention includes all the variants and/or modifications of the embodiments described below and represented in the attached drawings that are clear and obvious for the expert in the art.

In particular, in the figures:
- Figures 1a, 1b, 1c and 1d respectively show a side view, a sectional view, a perspective view and an exploded view of the device according to an embodiment of the present invention;
- Figures 2a and 2b respectively show a side view and a sectional view of a detail of the device according to the present invention;
- Figure 3 shows a side view of the anchoring tool of the device according to the present invention;

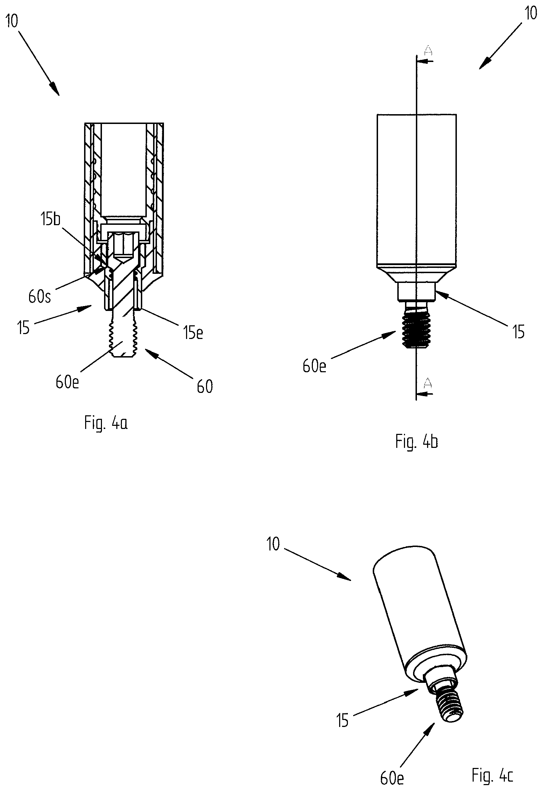

- Figures 4a, 4b and 4c respectively show a sectional view, a side view and a perspective view of a device according to an embodiment of the present invention;
- Figures 5a, 5b, 5c and 5d schematically show the steps for anchoring the device according to the invention;
- Figure 6 shows a side view of an extraction tool of the device according to the present invention;
- Figures 7a and 7b, 8a and 8b, 9a and 9b, 10a and 10b, 11a and 11b show the different steps for anchoring an anchoring structure according to the present invention;
- Figures from 12a to 12c respectively show a sectional view, a side view and a perspective view of a further embodiment of the device according to the present invention;
- Figures from 13a to 13c respectively show a sectional view, a side view and a perspective view of the device according to said further embodiment of the invention;

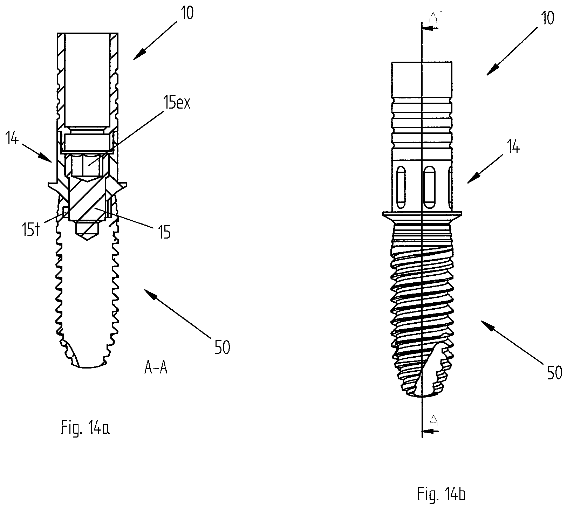

- Figures 14a and 14b respectively show a sectional view and a side view of the device according to said further embodiment of the invention.

### DETAILED DESCRIPTION OF THE PRESENT INVENTION

Although the present invention is described below with reference to its embodiments illustrated in the drawings, the present invention is not limited to the embodiments described below and illustrated in the drawings. It should rather be noted that the embodiments described below and represented in the drawings clarify some aspects of the present invention, the scope of which is defined in the claims.

The present invention can be successfully applied in particular in the field of dental technology, especially for making anchoring structures for dental prostheses.

It should however be pointed out that the present invention is not limited to this type of application. On the contrary, the present invention can be conveniently applied in all the cases where it is necessary to anchor a component to multiple anchoring points by means of a corresponding structure.

Some embodiments of the device according to the present invention are described here below; in the figures, similar or equivalent characteristics and/or component parts are identified by the same reference numbers.

With reference to the figures, it is possible to observe the configuration of the device 10 according to the present invention and the mutual position of its main component parts. In the above mentioned figures, in fact, it is possible to identify a first external tubular element (also called outer jacket) 11 and a second internal tubular element (or inner jacket) 12 that, in fact, is housed inside the first element 11. In particular, the element 12 serves as a shim intended to maintain the element 11 concentric. During use, the element 12 is removed and its volume is filled with the material that serves to fix the device to the supporting structure. Inside the inner jacket 12 there are the main parts of the actual anchoring component that is constituted by a first tubular component 13, a second tubular component 14 and a tubular translatable element 15. Said first and said second tubular components 13 and 14 are mutually fixed in a rigid way; for this purpose, the first tubular component 13 comprises a threaded portion (metal ring) 13f to which a corresponding threaded portion (not illustrated in the figures) is screwed, said corresponding threaded portion being obtained inside the second tubular component 14. Clearly, according to the needs and/or the circumstances, there are other possible solutions for mutually coupling said first and said second tubular portions; for example, the same can be coupled through interference and/or glued, etc.

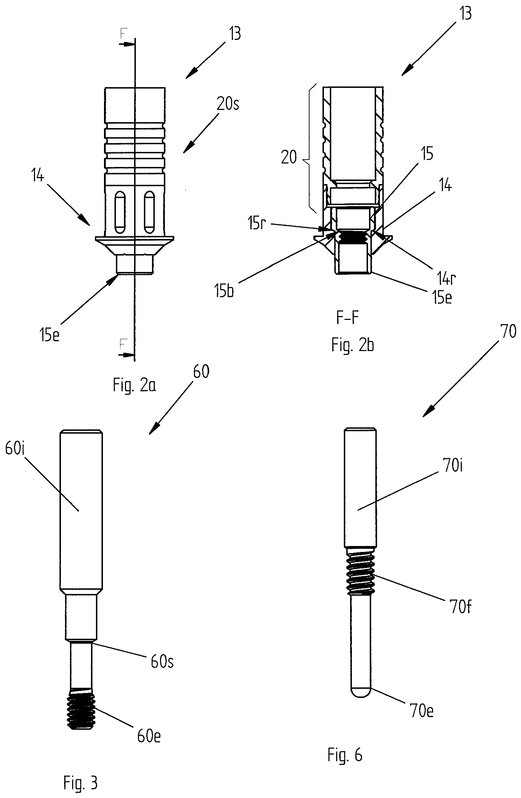

Once the assembly has been completed, the mutual position of said first and said second tubular components 13 and 14 is the one schematically shown in Figure 2a, in which said first tubular component 13 and said second tubular component 14 define a tubular system 20s.

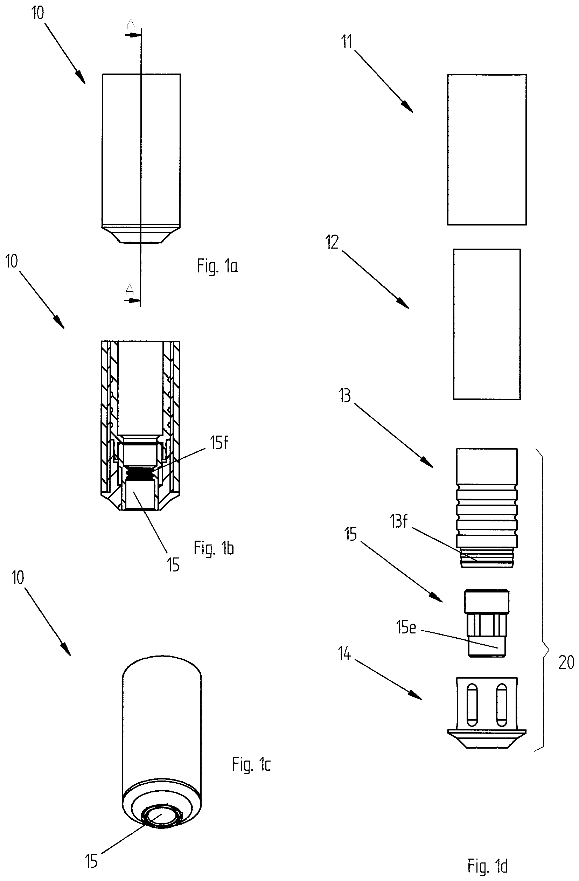

The element 15 is housed inside said tubular system 20s, said element 15 being tubular (hollow), too, and suited to be alternatively translated between a first retracted position, shown in Figure 1b, and a second opposite or extended position shown in Figure 2b.

In the retracted position shown in Figure 1b, the translatable element 15 is completely housed inside the tubular system 20s; on the contrary, in its extended position shown in Figure 2b the end portion 15e of the translatable element 15 projects from the tubular system 20s, in particular from the tubular component 14.

While reference to the following description should be made regarding the ways the translatable element 15 can be translated between its two positions, namely, extended position (Figure 2b) and retracted position (Figure 1b), it is now possible to observe that inside the tubular component 14 there is a tapered surface 14r against which, during translation of the element 15 from its retracted position to its extended position, a tapered surface 15r of the translatable element 15 strikes. The two surfaces 14r and 15r, respectively of the tubular component 14 and of the translatable element 15, thus define the end-of-stroke or maximum extension position of the translatable element 15.

In this position, or even in each intermediate position, the end portion 15e of the translatable element 15 can be accommodated inside a proper seat in an implant (see the following description), in such a way as to carry out a reliable and long-lasting anchorage of the device 10 to the implant.

It can also be understood from the figures (see in particular Figure 2b) that the element 15 is hollow and defines an abutment surface 15b that is tapered towards the inside; therefore, exerting a thrust action on the abutment surface 15b means obtaining the translation of the translatable element 15 from its retracted position towards its extended position.

In particular, the thrust action on the abutment surface 15b of the translatable element 15 can be obtained by means of an anchoring tool 60 of the type shown in Figure 3. Said anchoring tool comprises in particular a grip 60i for a user (a dental technician or a dentist), a threaded end portion 60e and a tapered thrusting surface 60s arranged between the grip 60i and the end 60e. Said tool 60 is especially suited to be inserted through the hollow translatable element 15 as shown in Figures from 4a to 4c, that is, with its end portion 60e projecting outside the translatable element 15 (beyond its end portion 15e), and with the thrusting surface 60s abutting the abutment surface 15b of the translatable element 15.

It should furthermore be noted that Figures from 4a to 4b show a variant of the anchoring tool 60 illustrated in Figure 3; said variant, in fact, does not comprise the grip portion 60i but rather an end opposite the threaded end 60e and provided with an engagement seat (for example with hexagonal cross section) suited to accommodate a tool with matching cross section. The advantage offered by the variant represented in Figures from 4a to 4c with respect to the one shown in Figure 3 lies in that the variant of Figures from 4a to 4c can be used as a screw or pin for definitively anchoring the device 10 to a corresponding implant.

The description provided here below with reference to Figures from 5a to 5d concerns the anchorage of the device 10 to an implant that is hollow and internally threaded, by means of a screw or pin or anchoring tool 60 of the type shown in Figures from 4a to 4c.

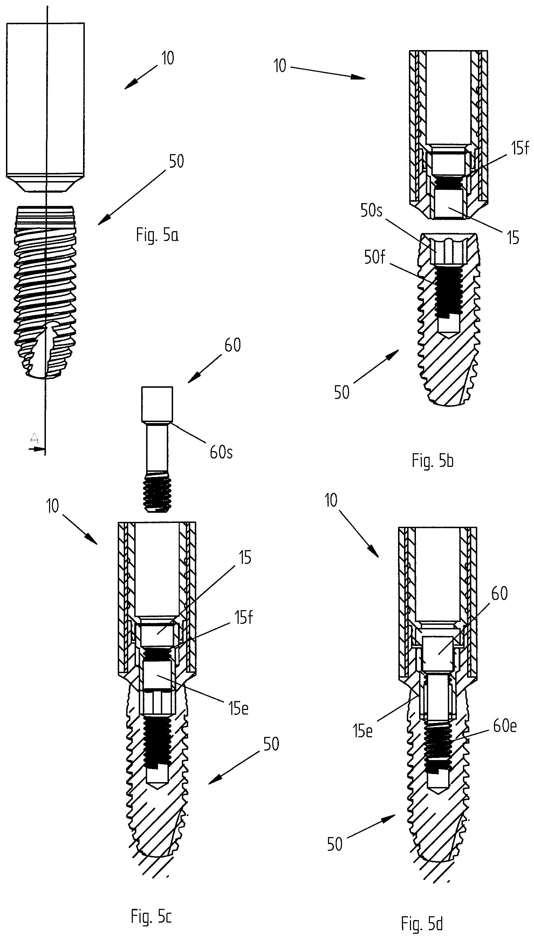

During the first step shown in Figure 5a and Figure 5b, the device 10 is brought to a position at the level of an implant 50 previously fixed to the bone structure of a patient (not shown in the figures). In the position according to Figures 5a and 5b the translatable element 15 is in its retracted position and at the level of an engagement seat 50s created in the hollow implant 50. Successively (Figure 5c), the device 10 is rested on the end of the implant 50 opposite the end of the implant that is buried in the bone structure and/or in the gum and the anchoring pin 60 is inserted into the device 10, and therefore also into the hollow translatable element 15. The insertion of the element 15 can then proceed until when its threaded end portion 60e becomes engaged (through counteraction or contact) with the threaded portion 50f provided inside the implant 50. Successively, by means of a tool fitted in the engagement seat of the anchoring pin 60, the same anchoring pin is set rotating in such a way as to progressively engage (screw) its end portion 60e into the threaded portion 50f of the implant 50. In this way, the pin 60 will be progressively inserted in the implant 50.

As the progressive insertion of the pin 60 inside the implant 50 continues, the thrusting surface 60s of the pin will come into contact with the corresponding abutment surface 15b of the translatable element 15 that is therefore driven by the pin 60. In this way, the end portion 15e of the translatable element 15 is pushed out of the tubular system 20s (of the tubular component 14) and is progressively inserted in the corresponding seat 50s in the implant. At this point, the anchorage of the device has been completed, as the anchorage is obtained thanks to the permanent engagement of the end portion 60e of the pin 60 in the implant 50, and also thanks to the engagement of the end portion 15e of the translatable element 15 in the corresponding seat 50s in the implant. In this way, the load exerted, for example, by a dental prosthesis fixed to the device 10 (on its part opposite the translatable element 15) will be conveniently distributed between the anchoring pin 60 and the translatable element 15.

In the case where the anchoring tool 60 shown in Figure 3 is used, the translation operations intended to translate the translatable element 15 in such a way as to insert its end portion 15e in the implant will be substantially similar to those just described above.

In this case, however, once the end 15e of the translatable element 15 has been inserted in the implant 50, the tool 60 will be removed by simply rotating it in the direction opposite the engaging direction. The definitive anchorage, if necessary, can be completed by means of an additional anchoring screw, substantially similar to the anchoring pin shown in Figures from 4a to 4c.

The operations necessary for translating the translatable element 15 from its extended position to its retracted position are described here below with reference to the figures.

In particular, Figure 6 shows an extraction tool 70 that is suitable for this purpose. Said tool 70 comprises, in particular, a grip 70i and an end portion 70e opposite the grip 70i and substantially cylindrical. In an intermediate position between the end 70e and the grip 70i there is a threaded portion 70f. With regard to the hollow translatable element 15, this is internally provided, too, with a threaded portion 15f, in a substantially intermediate position between the end 15e and the opposite end.

The translation of the translatable element 15 from its exposed position shown in Figure 2b to its retracted position shown in Figure 1b, or even the extraction of the end 15e of the translatable element 15 from the corresponding seat 50s in an implant, takes place as follows.

Assuming that the mutual position of the device 10 and of the corresponding implant 50 is the one shown in Figure 5d, and assuming for the sake of simplicity that the anchoring pin has already been removed, it will be possible to insert the tool 70 in the device 10 and therefore also through the translatable element 15, in particular until bringing the threaded portion 70f of the tool 70 in contact (first engagement) with the threaded portion 15f inside the translatable element 15. In this mutual position, the end portion 70e of the tool 70 will be at least partially housed inside the hollow implant 50. Thus, by rotating the tool 70 it is possible to make the threaded portions 70f and 15f progressively engage with each other, and therefore to progressively insert the end 70e of the tool 70 in the hollow implant 50. Said progressive insertion may continue until the end 70e of the tool 70 reaches the blind bottom of the hollow implant 50. At this point, continuing to rotate the tool 70, and thus further engaging (screwing) the two threaded portions 70f and 15f, translates the translatable element 15 in the direction opposite the direction of insertion of the tool 70 in the hollow implant 50, and therefore from its exposed position to its retracted position.

Once the end portion 15e of the element 15 has been completely extracted from the housing seat 50s provided in the implant, the device 10 will be released from the implant 50, and thus the device 10 can be definitively removed.

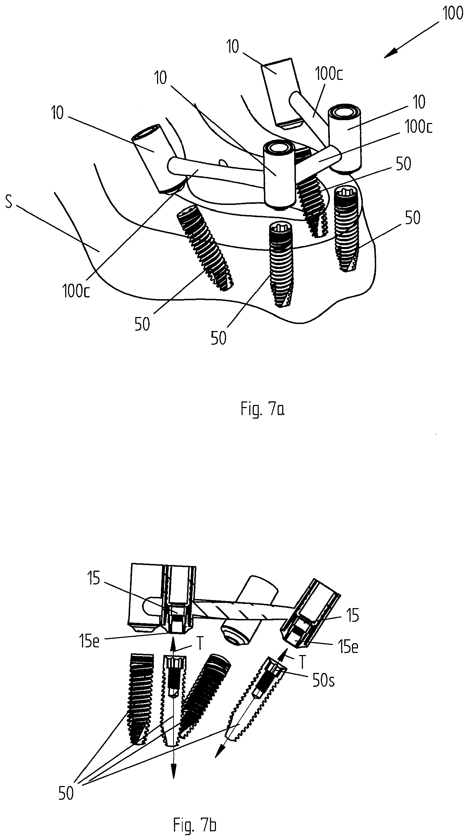

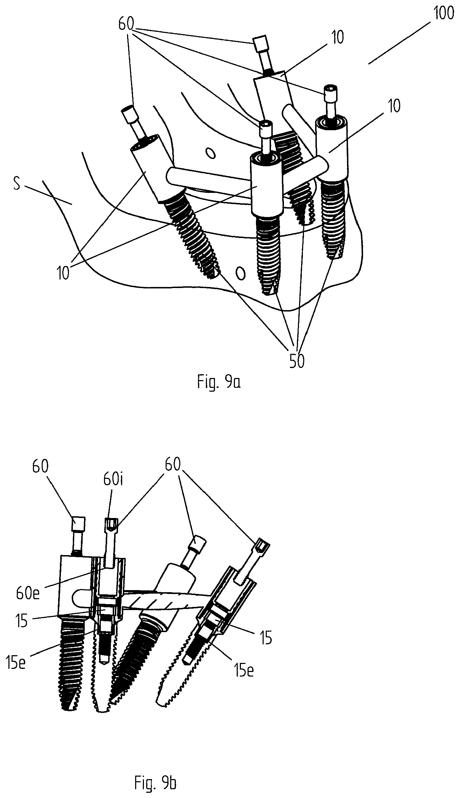

The description provided below and making reference to Figures 7a and 7b, 8a and 8b, 9a and 9b, 10a and 10b illustrates an anchoring structure according to the present invention and the operations for anchoring said structure to a plurality of implants previously fixed to the bone structure (for example, the mandible or the jaw) of a patient.

Observing the figures it is possible to understand that the structure 100 represented therein comprises a plurality of devices 10 (4 in the example represented therein), each one substantially identical to the device 10 previously described. Even though a further description of said devices is omitted herein for the sake of brevity, it is worth underlining that the four devices 10 are mutually connected in a rigid manner by means of connection structures (for example, metal bars) 100c. Each one of the devices 10 is intended to be anchored to a corresponding implant 50, also said implants 50 being substantially identical to those previously described.

In particular, the mutual arrangement of the implants is such that the same implants are misaligned and therefore not parallel to one another. Therefore, in the same way, the devices 10 are misaligned and not parallel to one another. Said misalignment of the devices can be specified with reference to the various directions of translation T of the translatable elements 15 of each one of the devices 10, said directions of translation T being, in fact, misaligned and therefore not mutually parallel.

Obviously, the structure 100 will be made based on the implants 50, especially based on their mutual arrangement. This means that the various devices 10 will be rigidly connected to one another taking care that the translation direction of the element 15 of each single device is parallel to the direction along which the corresponding implant 50 develops, or more precisely so that the axis of translation T of each single element 15 substantially coincides with the longitudinal axis of symmetry of the corresponding implant.

Thus, once the structure 100 has been made by proceeding as described above, the same is suited to be anchored to the implants 50 in the way described below.

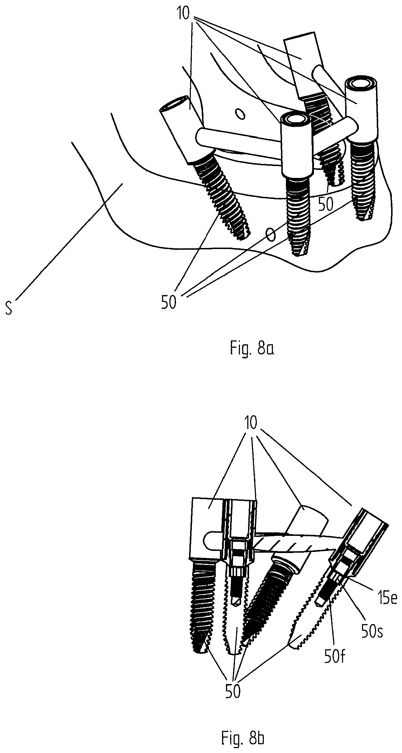

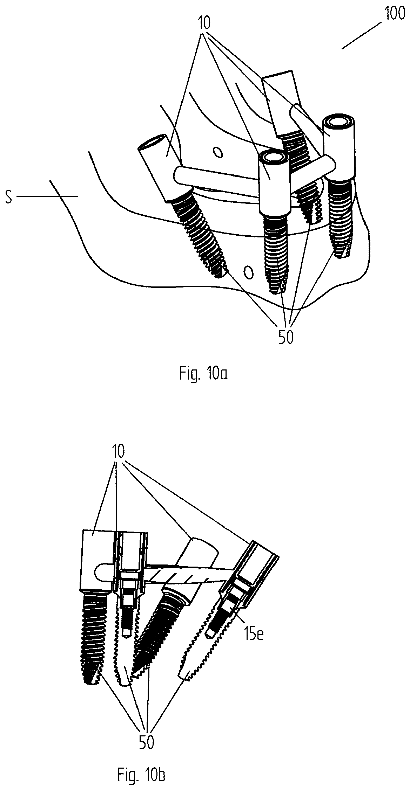

During the first step illustrated in Figures 7a and 7b, the structure 100 is brought to a position at the level of the implants 50 that were previously fixed to the bone structure S, in particular in such a way that the translatable element 15 of each one of the devices 10 is in its retracted position and at the level of an engagement seat 50s created in the corresponding hollow implant 50. Successively (Figures 8a and 8b), the structure 100 is rested on the implants 50, in particular so that each device 10 rests on the end of the corresponding implant 50 that is opposite the end of the implant buried in the bone structure S and/or in the gum, and an anchoring pin 60 is inserted inside each device 10, and therefore also inside the corresponding hollow translatable element 15. The insertion of each one of the anchoring pins or tools 60 can thus proceed until its threaded end portion 60e engages (through counteraction or contact) with the threaded portion 50f inside the corresponding implant 50. Successively, by means of a tool that becomes engaged in the engagement seat of each anchoring pin 60, each anchoring pin 60 is set rotating in such a way as to progressively engage (screw) its end portion 60e into the threaded portion 50f of the corresponding implant 50. In this way, the pin 60 is progressively inserted in the implant 50. As the progressive insertion of the pin 60 in the implant 50 continues, the thrusting surface 60s of the pin itself will come into contact with the corresponding abutment surface 15b of the translatable element 15 that will thus be driven by the pin 60. In this way, the end portion 15e of the translatable element 15 is pushed out of the tubular system 20s (of the tubular component 14) and is progressively inserted in the seat 50s of the corresponding implant 50 (Figures 10a and 10b). At this point the anchorage of the device has been completed, as the anchorage is obtained thanks to the permanent engagement of the end portion 60e of each pin 60 in the corresponding implant 50, and also thanks to the engagement of the end portion 15e of the translatable element 15 in the seat 50s provided in the corresponding implant. In this way, the load exerted, for example, by a dental prosthesis fixed to the structure 100 (on its part opposite the translatable elements 15) will be conveniently distributed between the anchoring pin 60 and the translatable element 15 of each device 10.

In the case where the anchoring tool 60 of Figure 3 is used, the operations performed to translate each one of the translatable elements 15 so as to insert its end portion 15e in the corresponding implant 50 will be substantially similar to those just described above.

In this case, however, once the end 15e of each translatable element 15 has been inserted in the corresponding implant 50, the tool 60 will be removed by simply rotating it in the direction contrary to the engaging direction. The definitive anchorage of the structure 100, if necessary, can be completed by means of additional anchoring screws, substantially similar to the anchoring pins 60, wherein each one of said screws engages into a corresponding implant 50.

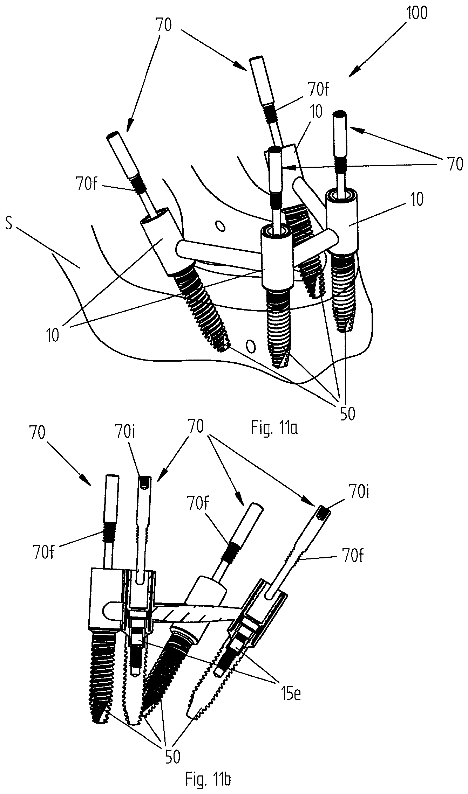

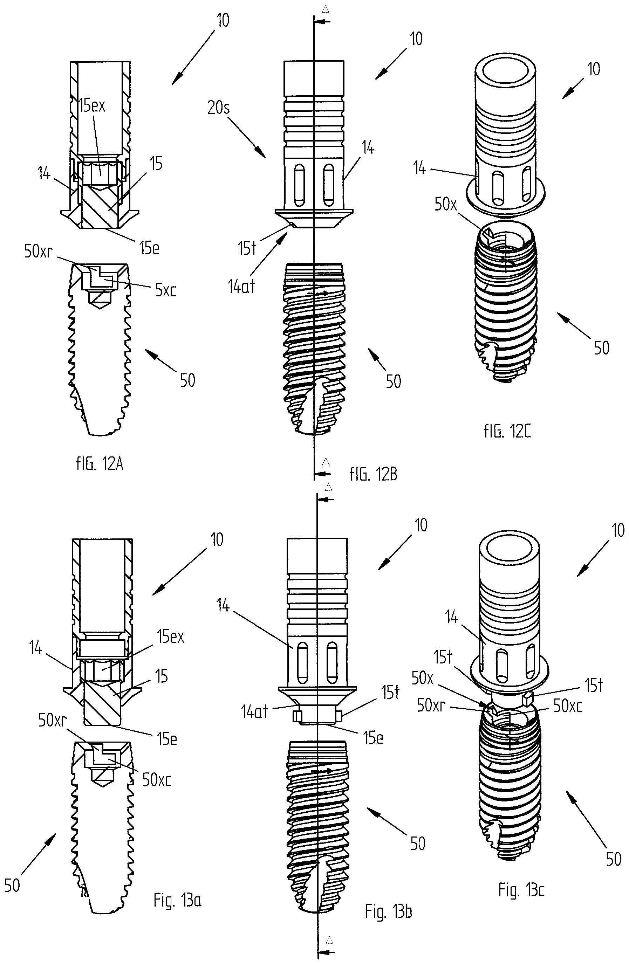

The operations necessary for releasing the structure 100 from the implants 50 are illustrated in Figures 11a and 11b.

Even in this case, using a tool 70 of the type shown in Figure 6 it is possible to obtain the translation of each one of the translatable elements 15 from its exposed position to its retracted position, and thus the extraction of the end 15e of each one of the translatable elements 15 from the seat 50s provided in the corresponding implant.

Assuming also in this case that the anchoring pins 60 have already been removed, it will be possible to insert the tool 70 in each one of the devices 10 and therefore also through each one of the translatable elements 15, in particular until bringing the threaded portion 70f of the tool 70 in contact (first engagement) with the threaded portion 15f situated inside the translatable element 15. In this mutual position, the end portion 70e of the tool 70 will be at least partially housed inside the corresponding hollow implant 50.

Thus, by rotating the tool 70 it is possible to make the threaded portions 70f and 15f progressively engage with each other, and therefore to progressively insert the end 70e of the tool 70 in the hollow implant 50. Said progressive insertion may continue until the end 70e of the tool 70 reaches the blind bottom of the corresponding hollow implant 50. At this point, continuing to rotate the tool 70, and thus further engaging (screwing) the two threaded portions 70f and 15f, means translating the translatable element 15 in the direction opposite the direction of insertion of the tool 70 in the hollow implant 50, and therefore from its exposed position to its retracted position.

Once the end portion 15e of each one of the elements 15 has been completely extracted from the housing seat 50s provided in the corresponding implant 50, the structure 100 will be released from the implants 50, and thus the structure 100 can be definitively removed.

The description provided below and making reference to Figures from 12a to 12c, from 13a to 13c and from 14a to 14b illustrates a further embodiment of the anchoring device according to the present invention; in the figures, the component parts and/or the characteristics described above with reference to other figures are identified by the same reference numbers.

The embodiment shown in the Figures from 12a to 12c, from 13a to 13c and from 14a to 14b differs from the embodiments previously described in that the translatable element 15 comprises two tabs 15t that project from its end portion 15e in opposite radial directions. In the retracted position of the element 15 (Figures from 12a to 12c), since in this case said element can be translated and rotated inside the tubular system 20s (see the detailed description provided here below), each one of the tabs 15t is housed into a corresponding housing seat 14 at obtained in the tubular system 20s, in particular in the lower end (at the bottom in the figures) of the tubular component 14.

On the contrary, with the element 15 in its advanced or exposed position (Figures from 13a to 13c), each one of said tabs 15t is suited to engage into a corresponding engagement seat 50x obtained in the tubular wall of the implant 50 and communicating with the inside of the implant 50 itself. In particular, each one of the engagement seats 50x comprises a portion 50xr that develops in a radial direction, as well as a portion 50xc that communicates with the radial portion 50xr and develops in a circumferential direction (along an arc of a circle having a predefined length). Obviously, the shape and size of each one of the seats 50x will correspond to the shape and size of the corresponding tab 15t. The advantages offered by this embodiment compared to the embodiments described above essentially concern the simplicity and reliability with which the element 15 can be inserted and engaged into the corresponding implant 50. The insertion of the element 15 in the implant 50 and its engagement in the implant 50 itself are, in fact, obtained as follows.

It can be observed that, at the level of its end opposite the engaging end 15e, the element 15, which in this case does not necessarily have to be hollow but can be blind (and therefore sturdier and suited to bear greater loads), comprises an engagement seat 15ex with substantially hexagonal cross section. By engaging a tool having a matching shape (for example, a simple Allen wrench) into the seat 15ex it will thus be possible to rotate the element 15 until bringing each one of the tabs 15t to a position at the level of the corresponding engagement seat 50x, in particular at the level of the portion 50xr. At this point, by simply exerting a pressure on the hexagonal tool, it will be possible to push the element 15 so as to translate it from its retracted position towards its exposed position, thus inserting its end portion 15e in the implant 50, in particular inserting each one of the tabs 15t in the portion 50xr of the corresponding housing seat 50x. Finally, rotating the hexagonal tool means rotating the element 15, inserting each one of the tabs 15t in the circumferential portion 50xc of the corresponding housing seat 50x, thus firmly engaging the element 15 into the implant 50, and therefore firmly anchoring the device 10 to the implant 50 itself.

Obviously, the release of the element 15 from the implant will be obtained by acting on the element 15 in the reverse way with the hexagonal tool, that is, by rotating it until bringing each one of the tabs to a position at the level of the portion 50xr of the corresponding seat 50x and thus extracting it from the implant 50.

It can therefore be understood that the embodiment just described above makes it possible to avoid the use of the engaging pin 60 that is necessary to anchor the embodiments described previously. Furthermore, it will be possible to use implants 50 not provided with an internal thread.

The description provided above, therefore, shows that the device and the structure according to the present invention allow the structure itself to be anchored to a plurality of misaligned or in any case non-parallel implants. In particular, this is made possible by providing each device of the structure with a translatable element (alternatively extractable and retractable), so that the anchorage of the structure can be obtained by simply engaging individually each translatable element with a corresponding implant.

While the present invention has been described with reference to the special embodiments illustrated in the figures, it should be noted that the present invention is not limited to the particular embodiments illustrated and described herein; on the contrary, further variants of the embodiments described herein fall within the scope of the present invention. For example, the number of devices forming a structure may vary depending on the needs and/or circumstances, in particular depending on the number of implants. In the same way, the solution for mutually fixing the devices in such a way as to form a substantially rigid structure can be selected among those known to the expert in the art. Finally, also the material for making the device and/or the structure according to the present invention can be selected based on the needs and/or circumstances (appearance, functionality, reliability, biologic compatibility, etc). The scope of the present invention is thus defined in the claims.

## Claims

1. Device (10) for anchoring a dental prosthesis to at least one implant (50) at least partially hollow and fixed to the bone structure (S) of a patient, said device (10) comprising
an anchoring component (20) suited to be anchored to said at least one implant (50),
said anchoring component (20) comprising a hollow tubular element (13, 14) and a translatable element (15) which is suited to be translated between a first retracted position and a second position opposite said first retracted position so that,
when in said first retracted position, said translatable element (15) is accommodated inside said hollow tubular element (13, 14), while translating said translatable element (15) from said first retracted position to said second opposite position, a first end portion (15e) of said translatable element (15) is at least partially inserted into said at least one implant (50) so that in said second opposite position said end portion (15e) projects at least partially from said hollow tubular element (13, 14);
**wherein** said hollow tubular element (13, 14) comprises a first portion (13) and a second portion (14) that are both tubular and
**characterized in that**
each of the first portion (13) and the second portion (14) comprise coupling portions suited to connect and disconnect the first portion (13) and the second portion (14) from each other.

2. Device (10) according to claim 1, **characterized in that** said translatable element (15) comprises a first abutment surface (15b), and **in that** said translatable element (15) can be translated from said first retracted position to said second opposite position by exerting a thrust action on said first abutment surface (15b).

3. Device (10) according to claim 2, **characterized in that** said first abutment surface (15b) is part of the second end portion of said translatable element opposite said first end portion (15e).

4. Device according to any of claims from 1 to 3, **characterized in that** said translatable element (15) is suited to be translated from said second position to said first retracted position.

5. Device according to claim 4, **characterized in that** said translatable element (15) comprises a threaded portion (15f).

6. Anchoring structure (100) suited to anchor a dental prosthesis to at least two implants (50), both of which are at least partially hollow and fixed to the bone structure (S) of a patient, said structure (100) comprising at least two anchoring devices (10), each suited to be anchored to one of said at least two implants (50), **characterized in that** it comprises at least one anchoring device (10) according to any of claims from 1 to 5.

7. Structure (100) according to claim 6, **characterized in that** said at least two devices (10) are rigidly fixed to each other.

8. Structure (100) according to claim 7, **characterized in that** the directions of translation (T) of the translatable elements (15) of said at least two devices are not parallel.

9. Anchoring kit for anchoring a dental prosthesis to at least one at least partially hollow implant (50) fixed to the bone structure (S) of a patient, **characterized in that** it comprises at least one device (10) according to any of claims from 1 to 5 and/or a structure (100) according to any of claims from 6 to 8, and **in that** it comprises at least one anchoring tool (60) comprising a thrusting surface (60s) suited to abut against said first abutment surface (15b) of said translatable element (15), so as to exert said thrust action on said first abutment surface (15b) of said translatable element (15) for translating said one or more translatable elements (15) from said first retracted position to said second opposite position.

10. Anchoring kit according to claim 9, **characterized in that** it comprises at least one extraction tool (70) for translating said one or more translatable elements (15) from said second position to said first retracted position.

11. Anchoring kit according to claim 10, **characterized in that** said extraction tool (70) comprises a second threaded portion (70f) and said translatable element (15) comprises a threaded portion (15f), so that said threaded portion (15f) is suited to be engaged by said second threaded portion (70f) of said extraction tool (70), so that by progressively engaging said threaded portion (15f) of said translatable element (15) with said second threaded portion (70f) of said extraction tool (70) said translatable element (15) is translated from said second position to said first retracted position.

12. Anchoring system for anchoring a dental prosthesis to the bone structure (S) of a patient, **characterized in that** it comprises at least one device (10) according to claims from 1 to 5 or at least one structure (100) according to any of claims from 6 to 8 or an anchoring kit according to any of claims from 9 to 11, and **in that** it furthermore comprises one or more at least partially hollow implants (50) suited to be rigidly fixed to the bone structure (S) of a patient.

## Patentansprüche

1. Vorrichtung (10) zur Verankerung einer Zahnprothese an wenigstens einem Implantat (50), das wenigstens teilweise hohl und an der Knochenstruktur (S) eines Patienten fixiert ist, wobei die besagte Vorrichtung (10) Folgendes umfasst:
eine Verankerungskomponente (20), dazu geeignet, an dem besagten wenigstens einen Implantat (50) verankert zu werden,
wobei die besagte Verankerungskomponente (20) ein hohles, röhrenförmiges Element (13, 14) umfasst sowie ein verschiebbares Element (15), das geeignet ist, zwischen einer ersten eingezogenen Position und einer zweiten, der besagten ersten, eingezogenen Position entgegengesetzten Position verschoben zu werden, so dass
das besagte verschiebbare Element (15), wenn es sich in der besagten ersten, eingezogenen Position befindet, innerhalb des besagten, hohlen röhrenförmigen Element (13, 14) aufgenommen ist, und während des Verschiebens des besagten verschiebbaren Elements (15) aus der besagten ersten, eingezogenen Position in die besagte zweite, entgegengesetzte Position ein erster Endabschnitt (15) des besagten verschiebbaren Elements (15) wenigstens teilweise in das besagte, wenigstens eine Implantat (50) eingeführt wird, so dass in der besagten zweiten, entgegengesetzten Position der besagte Endabschnitt (15e) wenigstens teilweise aus dem besagten hohlen, röhrenförmigen Element (13, 14) herausragt;
**wobei** das besagte hohle, röhrenförmigen Element (13, 14) einen ersten Abschnitt (13) und einen zweiten Abschnitt (14) umfasst, die beide röhrenförmig sind und
**dadurch gekennzeichnet, dass**
sowohl der erste Abschnitt (13) als auch der zweite Abschnitt (14) Kupplungsabschnitte umfassen, die geeignet sind, den ersten Abschnitt (13) und den zweiten Abschnitt (14) miteinander zu verbinden und voneinander zu lösen.

2. Vorrichtung (10) nach Patentanspruch 1, **dadurch gekennzeichnet, dass** das besagte verschiebbare Element (15) eine erste Abutmentfläche (15b) umfasst, und dadurch, dass das besagte verschiebbare Element (15) aus der besagten ersten, eingezogenen Position in die besagte zweite, entgegengesetzte Position verschoben werden kann, indem auf die besagte erste Abutmentfläche (15b) Druck ausgeübt wird.

3. Vorrichtung (10) nach Patentanspruch 2, **dadurch gekennzeichnet, dass** die besagte erste Abutmentfläche (15b) Teil des zweiten Endabschnitts des besagten verschiebbaren Elements ist, welches dem besagten ersten Endabschnitt (15e) entgegengesetzt ist.

4. Vorrichtung nach einem beliebigen der Patentansprüche von 1 bis 3, **dadurch gekennzeichnet, dass** das besagte verschiebbare Element (15) geeignet ist, aus der besagten zweiten Position in die besagte erste, eingezogene Position verschoben zu werden.

5. Vorrichtung nach Patentanspruch 4, **dadurch gekennzeichnet, dass** das besagte verschiebbare Element (15) einen Gewindeabschnitt (15f) umfasst.

6. Verankerungsstruktur (100), dazu geeignet, eine Zahnprothese an wenigstens zwei Implantaten (50) zu verankern, die beide wenigstens teilweise hohl und an der Knochenstruktur (S) eines Patienten fixiert sind, wobei die besagte Struktur (100) wenigstens zwei Verankerungsvorrichtungen (10) umfasst, die beide dazu geeignet sind, an einem der besagten wenigstens zwei Implantate (50) verankert zu werden, **dadurch gekennzeichnet, dass** es wenigstens eine Verankerungsvorrichtung (10) nach einem beliebigen der Patentansprüche von 1 bis 5 umfasst.

7. Struktur (100) nach Patentanspruch 6, **dadurch gekennzeichnet, dass** die besagten wenigstens zwei Vorrichtungen (10) starr aneinander fixiert sind.

8. Struktur (100) nach Patentanspruch 7, **dadurch gekennzeichnet, dass** die Verschieberichtungen (T) der verschiebbaren Elemente (15) der besagten wenigstens zwei Vorrichtungen nicht parallel sind.

9. Verankerungskit zur Verankerung einer Zahnprothese an wenigstens einem wenigstens teilweise hohlen Implantat (50), das an der Knochenstruktur (S) eines Patienten fixiert ist, **dadurch gekennzeichnet, dass** es wenigstens eine Vorrichtung (10) nach einem jeden der Patentansprüche von 1 bis 5 und/oder eine Struktur (100) nach einem jeden der Patentansprüche von 6 bis 8 umfasst, und dadurch, dass es wenigstens ein Verankerungswerkzeug (60) mit einer Druckfläche (60s) umfasst, dazu geeignet, an die besagte erste Abutmentfläche (15b) des besagten verschiebbaren Elements (15) anzustoßen, dazu geeignet, gegen die besagte erste Abutmentfläche (15b) des besagten verschiebbaren Elements (15) zu drücken, um das besagte eine bzw. die besagten mehreren verschiebbaren Element(e) (15) aus der besagten ersten, eingezogenen Position in die besagte zweite, entgegengesetzte Position zu verschieben.

10. Verankerungskit nach Patentanspruch 9, **dadurch gekennzeichnet, dass** es wenigstens ein Abziehwerkzeug (70) umfasst, um das besagte eine bzw. die besagten mehreren verschiebbaren Element(e) (15) aus der besagten zweiten Position in die besagte erste, eingezogene Position zu verschieben.

11. Verankerungskit nach Patentanspruch 10, **dadurch gekennzeichnet, dass** das besagte Abziehwerkzeug (70) einen zweiten Gewindeabschnitt (70f) umfasst, und das besagte verschiebbare Element (15) einen Gewindeabschnitt (15f) umfasst, so dass der besagte Gewindeabschnitt (15f) dazu geeignet ist, in den besagten zweiten Gewindeabschnitt (70f) des besagten Abziehwerkzeugs (70) einzugreifen, so dass durch das besagte schrittweise Eingreifen des besagten Gewindeabschnitts (15f) des besagten verschiebbaren Elements (15) in den besagten Gewindeabschnitt (70f) des besagten Abziehwerkzeugs (70) das besagte verschiebbare Element (15) aus der besagten zweiten Position in die besagte erste, eingezogene Position verschoben wird.

12. Verankerungssystem zur Verankerung einer Zahnprothese an der Knochenstruktur (S) eines Patienten, **dadurch gekennzeichnet, dass** es wenigstens eine Vorrichtung (10) nach den Patentansprüchen von 1 bis 5 oder wenigstens eine Struktur (100) nach einem beliebigen der Patentansprüche von 6 bis 8 oder einen Verankerungskit nach einem beliebigen der Patentansprüche von 9 bis 11 umfasst, und dadurch, dass es des Weiteren ein oder mehrere wenigstens teilweise hohles/ hohle Implantat(e) (50) umfasst, dazu geeignet, starr an der Knochenstruktur (S) eines Patienten fixiert zu werden.

## Revendications

1. Dispositif (10) pour l'ancrage d'une prothèse dentaire à au moins un implant (50) au moins partiellement creux et fixé à la charpente osseuse (S) d'un patient, ledit dispositif (10) comprenant
un composant d'ancrage (20) apte à être ancré audit au moins un implant (50), ledit composant d'ancrage (20) comprenant un élément tubulaire creux (13, 14) et un élément translatable (15) apte à être translaté entre une première position rétractée et une deuxième position opposée à ladite première position rétractée, de manière à ce que
dans ladite première position rétractée, ledit élément translatable (15) est logé à l'intérieur dudit élément tubulaire creux (13, 14), alors que, en translatant ledit élément translatable (15) de ladite première position rétractée à ladite deuxième position opposée, une première portion d'extrémité (15e) dudit élément translatable(15) est insérée au moins partiellement à l'intérieur dudit au moins un implant (50), de façon à ce que dans ladite deuxième position opposée ladite portion d'extrémité (15e) saillit au moins partiellement dudit élément tubulaire creux (13, 14);
**où** ledit élément tubulaire creux (13, 14) comprend une première portion (13) etune deuxième portion (14) qui sont tubulaires et
**caractérisé en ce que**
aussi bien la première portion (13) que la deuxième portion (14) comprennent des portions d'accouplement aptes à connecter et déconnecter la première portion (13) et la deuxième portion (14) entre elles.

2. Dispositif (10) selon la revendication 1, **caractérisé en ce que** ledit élément translatable(15) comprend une première surface de butée (15b), et **en ce que** ledit élément translatable (15) peut être translaté de ladite première position rétractée à ladite deuxième position opposée en exerçant une action de poussée sur ladite première surface de butée (15b).

3. Dispositif (10) selon la revendication 2, **caractérisé en ce que** ladite première surface de butée (15b) fait partie de la deuxième portion d'extrémité dudit élément translatable opposé à ladite première portion d'extrémité (15e).

4. Dispositif selon l'une quelconque des revendications de 1 à 3, **caractérisé en ce que** ledit élément translatable(15) est apte à être translaté de ladite deuxième position à ladite première position rétractée.

5. Dispositif selon la revendication 4, **caractérisé en ce que** ledit élément translatable (15) comprend une portion filetée (15f).

6. Structure d'ancrage (100) apte à ancrer une prothèse dentaire à au moins deux implants (50), les deux étant au moins partiellement creux et fixés à la charpente osseuse (S) d'un patient, ladite charpente (100) comprenant au moins deux dispositifs d'ancrage (10), chacun étant apte à être ancré à un desdits deux implants (50), **caractérisée en ce qu'**il comprend au moins un dispositif d'ancrage (10) selon l'une quelconque des revendications de 1 à 5.

7. Structure (100) selon la revendication 6, **caractérisée en ce que** lesdits au moins deux dispositifs (10) sont rigidement fixés l'un à l'autre.

8. Structure (100) selon la revendication 7, **caractérisée en ce que** les directions de translation (T) des éléments translatables(15) desdits au moins deux dispositifs non sont parallèles.

9. Kit d'ancrage d'une prothèse dentaire à au moins un implant (50) au moins partiellement creux (50) fixé à la charpente osseuse (S) d'un patient, **caractérisé en ce qu**'il comprend au moins un dispositif (10) selon l'une quelconque des revendications de 1 à 5 et/ou une structure (100) selon l'une quelconque des revendications de 6 à 8, et en ce qu'il comprend au moins un outil d'ancrage (60) comprenant une surface de poussée (60s) apte à s'appuyer contre ladite première surface de butée (15b) dudit élément translatable(15), de façon à exercer ladite action de poussée sur ladite surface de butée (15b) dudit élément translatable(15) pour translater lesdits un ou plusieurs éléments translatables(15) de ladite première position rétractée à ladite deuxième position opposée.

10. Kit d'ancrage selon la revendication 9, **caractérisé en ce qu**'il comprend au moins un outil d'extraction (70) pour la translation desdits un ou plusieurs éléments translatables(15) de ladite deuxième position à ladite première position rétractée.

11. Kit d'ancrage selon la revendication 10, **caractérisé en ce que** ledit outil d'extraction (70) comprend une deuxième portion filetée (70f) et ledit élément translatable (15) comprend une portion filetée (15f), de façon à ce que ladite portion filetée (15f) est apte à être engagée par ladite deuxième portion filetée (70f) dudit outil d'extraction (70), de façon à ce que, en engageant progressivement ladite portion filetée (15f) dudit élément translatable(15) avec ladite deuxième portion filetée (70f) dudit outil d'extraction (70), ledit élément translatable(15) est translaté de ladite deuxième position à ladite première position rétractée.

12. Système d'ancrage d'une prothèse dentaire à la charpente osseuse (S) d'un patient, **caractérisé en ce qu'**il comprend au moins un dispositif (10) selon les revendications de 1 à 5 ou au moins une structure (100) selon l'une quelconque des revendications de 6 à 8 ou un kit d'ancrage selon l'une quelconque des revendications de 9 à 11, et **en ce qu'**il comprend en outre un ou plusieurs implants (50) au moins partiellement creux aptes à être fixés rigidement à la charpente osseuse (S) d'un patient.
